# EUROPEAN PATENT APPLICATION

(11) **EP 4 571 541 A1**
(43) Date of publication of application: **18.06.2025**
(21) Application number: 23869583.7
(22) Date of filing: 26.04.2023
(51) Int. Cl.: G06F 21/10

(54) **IN-VEHICLE APPLICATION ACTIVATION METHOD, VEHICLE-MOUNTED DEVICE, AND VEHICLE**

(30) Priority: 30.09.2022 CN 202211215678
(71) Applicant: BYD Company Limited, Shenzhen, Guangdong 518118 (CN)
(72) Inventor: DONG, Jing, Shenzhen, Guangdong 518118 (CN); YANG, Dongsheng, Shenzhen, Guangdong 518118 (CN); LIU, Ke, Shenzhen, Guangdong 518118 (CN); REN, Bin, Shenzhen, Guangdong 518118 (CN); SUN, Xuan, Shenzhen, Guangdong 518118 (CN)
(74) Representative: Wu, Ting
(86) International application number: PCT/CN2023/090772
(87) International publication number: WO 2024/066327

(57) **Abstract**

An in-vehicle application activation method, a vehicle-mounted device, and a vehicle, relating to the technical field of vehicles. The method comprises: acquiring a virtual code, wherein the virtual code is configured to identify vehicle manufacturer information (S101); and sending the virtual code to an in-vehicle application, such that the in-vehicle application executes an activation operation according to the virtual code (S102).

## Description

### CROSS-REFERENCE TO RELATED APPLICATIONS

The present disclosure claims priority to and benefits of Chinese Patent Application No. 202211215678.2, filed on September 30, 2022 and entitled "IN-VEHICLE APPLICATION ACTIVATION METHOD AND APPARATUS, VEHICLE-MOUNTED DEVICE, VEHICLE, AND STORAGE MEDIUM". The entire content of the above-referenced application is incorporated herein by reference.

### FIELD

The present disclosure relates to the field of vehicle technologies, and specifically, to an in-vehicle application activation method, a vehicle-mounted device, and a vehicle.

### BACKGROUND

Currently, there are two methods to activate an in-vehicle application: offline activation and online activation. The two methods have one thing in common: In both methods, a vehicle's unique identification number VIN (Vehicle Identification Number, vehicle identification number), which is used as activation information, needs to be transmitted to a third-party application. The difference is as follows: A verification operation during the offline activation is performed locally on the vehicle. Specifically, before the application is installed on a vehicle, an original equipment manufacturer sends VINs of vehicles of a current batch to a third-party application supplier. The third-party application supplier generates an offline verification program based on a provided list of VINs and installs the offline verification program locally on the vehicle together with an application installation package. When a new vehicle is delivered to a user, the application is started to acquire a VIN of the vehicle, and whether the VIN is on a list of VINs that has been activated is checked. If the VIN is on the list, the verification is passed and the application is activated. A verification operation during the online activation is performed via a cloud server of a third-party application supplier. Specifically, when a vehicle is connected to the Internet, the application acquires a VIN of the vehicle via a vehicle system interface, and then uploads the VIN to the cloud server of the third-party application supplier. After activation information is verified, an activation status is returned.

The two methods have a significant risk: The VIN of the vehicle is personal information of a user. The personal information of the user is transmitted without any encryption, which is insecure and can easily lead to leakage of the personal information of the user, among other issues. In addition, there is also a legal risk to directly expose the personal information of the user to the third-party application supplier.

### SUMMARY

The present disclosure is intended to resolve at least one of technical problems in the related art to some extent. Therefore, a first objective of the present disclosure is to provide an in-vehicle application activation method, in which a virtual code is acquired, to enable an in-vehicle application to perform an activation operation based on the virtual code. In this way, security of personal privacy data of a user is greatly ensured, and user experience is improved, with a simple and efficient method.

A second objective of the present disclosure is to provide an in-vehicle application activation apparatus.

A third objective of the present disclosure is to provide a vehicle-mounted device.

A fourth objective of the present disclosure is to provide a vehicle.

A fifth objective of the present disclosure is to provide a computer-readable storage medium.

To achieve the foregoing objectives, an embodiment of a first aspect of the present disclosure provides an in-vehicle application activation method. The method includes: A virtual code is acquired, where the virtual code is configured to identify vehicle manufacturer information; and the virtual code is sent to an in-vehicle application, to enable the in-vehicle application to perform an activation operation based on the virtual code.

According to the in-vehicle application activation method of this embodiment of the present disclosure, the virtual code configured to identify the vehicle manufacturer information is acquired, and the virtual code is sent to the in-vehicle application, so that the in-vehicle application can identify a vehicle manufacturer based on the vehicle manufacturer information in the virtual code, so as to perform the activation operation. The virtual code includes only the vehicle manufacturer information and does not include any user personal information. In this way, security of personal privacy data of a user is greatly ensured, and user experience is improved, with a simple and efficient method.

In some embodiments, the virtual code includes an encrypted code and an activation verification code, and the encrypted code is obtained by encrypting information other than the vehicle manufacturer information. The activation verification code is configured to identify a name of a vehicle manufacturer.

In some embodiments, that a virtual code is acquired includes: A vehicle identification number is acquired; an encryption operation is performed on the vehicle identification number to obtain a first sequence code; and an activation verification code is acquired, and the virtual code is generated based on the activation verification code and the first sequence code.

In some embodiments, that a virtual code is acquired includes: A vehicle identification number is acquired; a random code is acquired, and a second sequence code is generated based on the random code and the vehicle identification number; an encryption operation is performed on the second sequence code to obtain a third sequence code; and an activation verification code is acquired, and the virtual code is generated based on the activation verification code and the third sequence code. In some embodiments, that a random code is acquired includes: A vehicle model is determined; and a random code is generated based on the vehicle model.

In some embodiments, that an activation verification code is acquired includes: A vehicle manufacturer identifier is determined, where the vehicle manufacturer identifier indicates the vehicle manufacturer information; and the activation verification code is determined based on the vehicle manufacturer identifier.

In some embodiments, the encryption operation is performed by using an MD5 encryption algorithm.

In some embodiments, that a vehicle identification number is acquired includes: The vehicle identification number sent by a vehicle is received in response to a sending request from the vehicle, where the sending request is generated by the vehicle each time the vehicle is powered on or reconnects to a network after disconnection and when the virtual code is not detected.

In some embodiments, that the virtual code is sent to an in-vehicle application includes: The vehicle sends the virtual code to the in-vehicle application when the in-vehicle application is started for the first time.

To achieve the foregoing objectives, an embodiment of a second aspect of the present disclosure provides an in-vehicle application activation apparatus, including: an acquisition module, configured to acquire a virtual code, where the virtual code is configured to identify vehicle manufacturer information; and a sending module, configured to send the virtual code to an in-vehicle application, to enable the in-vehicle application to perform an activation operation based on the virtual code.

According to the in-vehicle application activation apparatus in this embodiment of the present disclosure, the acquisition module acquires the virtual code, and the sending module sends the virtual code to the in-vehicle application, to enable the in-vehicle application to perform the activation operation based on the virtual code. In this way, security of personal privacy data of a user is greatly ensured, and user experience is improved, with a simple and efficient method.

To achieve the foregoing objectives, an embodiment of a third aspect of the present disclosure provides a vehicle-mounted device, including a memory, a processor, and an in-vehicle application activation program stored in the memory and executable on the processor. When the processor executes the in-vehicle application activation program, the in-vehicle application activation method according to the embodiment of the first aspect is implemented.

According to the vehicle-mounted device of this embodiment of the present disclosure, the foregoing in-vehicle application activation method is used. In this way, security of personal privacy data of a user is greatly ensured, and user experience is improved, with a simple and efficient method.

To achieve the foregoing objectives, an embodiment of a fourth aspect of the present disclosure provides a vehicle, including the foregoing in-vehicle application activation apparatus, or the foregoing vehicle-mounted device.

According to the vehicle mounted device in this embodiment of the present disclosure, including the foregoing in-vehicle application activation apparatus or the foregoing vehicle-mounted device, security of personal privacy data of a user can be greatly ensured, and user experience is improved, with a simple and efficient method.

To achieve the foregoing objectives, an embodiment of a fifth aspect of the present disclosure provides a computer-readable storage medium, having an in-vehicle application activation program stored thereon. When the in-vehicle application activation program is executed by a processor, the in-vehicle application activation method according to the embodiment of the first aspect is implemented.

According to the computer-readable storage medium of this embodiment of the present disclosure, the foregoing in-vehicle application activation method is used. In this way, security of personal privacy data of a user is greatly ensured, and user experience is improved, with a simple and efficient method.

The additional aspects and advantages of the present disclosure will be provided in the following description, some of which will become apparent from the following description or may be learned from practices of the present disclosure.

### BRIEF DESCRIPTION OF THE DRAWINGS

The foregoing and/or additional aspects and advantages of the present disclosure will become apparent and comprehensible from the following descriptions of the implementations with reference to the accompanying drawings.
FIG. 1 is a schematic flowchart of an in-vehicle application activation method according to an embodiment of the present disclosure;
FIG. 2 is a schematic flowchart of an in-vehicle application activation method according to an embodiment of the present disclosure; and
FIG. 3 is a schematic diagram of a structure of an in-vehicle application activation apparatus according to an embodiment of the present disclosure.

### DETAILED DESCRIPTION

Embodiments of the present disclosure are described below in detail. Examples of embodiments are shown in the accompanying drawings, and same or similar reference signs in all the accompanying drawings indicate same or similar components or components having same or similar functions. Embodiments described below with reference to the accompanying drawings are exemplary, and are intended to explain the present disclosure and cannot be construed as a limitation on the present disclosure.

The following describes an in-vehicle application activation method, a vehicle-mounted device, and a vehicle according to embodiments of the present disclosure with reference to the accompanying drawings.

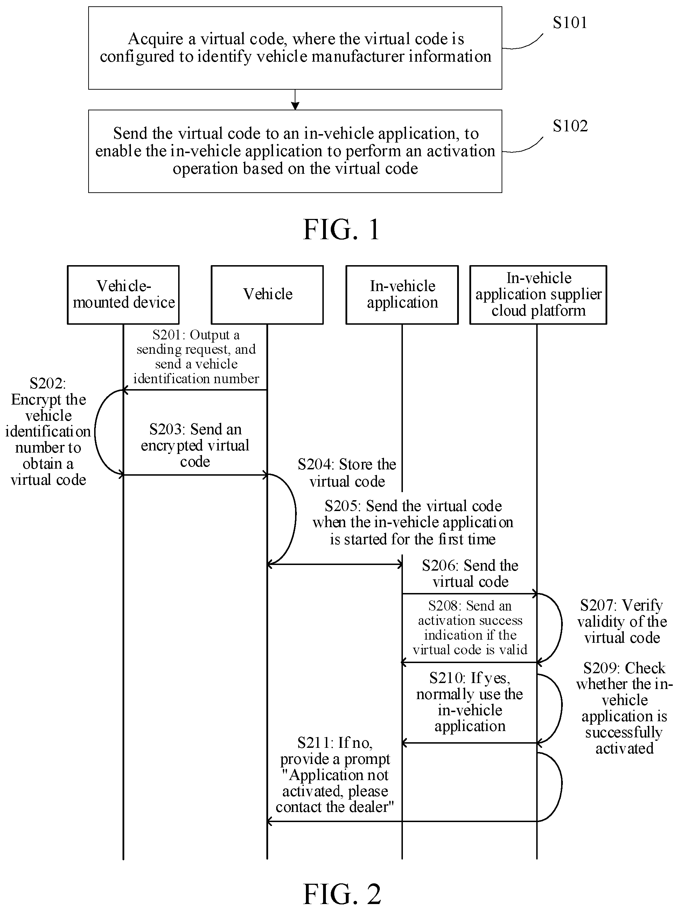

FIG. 1 is a schematic flowchart of an in-vehicle application activation method according to an embodiment of the present disclosure. As shown in FIG. 1, the in-vehicle application activation method is applied to a vehicle-mounted device. The method may include the following steps:
S101: A virtual code is acquired, where the virtual code is configured to identify vehicle manufacturer information.

Specifically, the vehicle-mounted device acquires the virtual code that includes vehicle manufacturer information. The virtual code is configured to identify the vehicle manufacturer information. After the vehicle-mounted device sends the virtual code to an in-vehicle application, the in-vehicle application may identify a vehicle based on the virtual code including the vehicle manufacturer information.

The virtual code configured to identify the vehicle manufacturer information is acquired, and the virtual code is sent to the in-vehicle application, to enable the in-vehicle application to identify a vehicle manufacturer based on the vehicle manufacturer information in the virtual code, so as to perform an activation operation. The virtual code includes only the vehicle manufacturer information, thereby avoiding transmission of personal information of a user. In this way, security of personal privacy data of the user can be greatly ensured, and user experience can be improved, with a simple and efficient method.

In some embodiments, the virtual code includes an encrypted code and an activation verification code, and the encrypted code is obtained by encrypting information other than the vehicle manufacturer information. The activation verification code is configured to identify a name of the vehicle manufacturer.

In addition, the virtual code further includes encrypted information that is obtained by encrypting information other than the in-vehicle manufacturer information. The other information may be user personal information, vehicle model information, vehicle body information, engine manufacturer information, vehicle factory information, and the like. The other information is not specifically limited herein. The security of personal privacy data of the user is greatly ensured by encrypting the other information, thereby improving user experience, with a simple and efficient method.

In some embodiments, the virtual code may be acquired by: acquiring a vehicle identification number; performing an encryption operation on the vehicle identification number to obtain a first sequence code; and acquiring an activation verification code, and generating the virtual code based on the activation verification code and the first sequence code. Specifically, the vehicle-mounted device needs to first acquire a real vehicle identification number. After the vehicle identification number is acquired, the vehicle identification number may be encrypted first. For example, a one-way encryption algorithm may be used to encrypt the vehicle identification number to obtain the first sequence code. Then, the vehicle-mounted device generates the activation verification code. Because the virtual code finally generated needs to be effective in identifying the vehicle, the activation verification code may be data related to inherent information of the vehicle. The vehicle-mounted device generates the virtual code based on the activation verification code and the first sequence code. For example, the activation verification code and the first sequence code may be combined to obtain the virtual code.

In some embodiments, the vehicle identification number may be acquired by: receiving, in response to a sending request from the vehicle vehicle, the vehicle identification number sent by a vehicle, where the sending request is generated by the vehicle each time the vehicle is powered on or reconnects to a network after disconnection and when the virtual code is not detected. The virtual code is a unique vehicle identification number that is obtained by anonymizing and encrypting the vehicle identification number and is for use in the in-vehicle application activation.

Specifically, an unactivated version of an in-vehicle application is pre-installed in the vehicle, and the in-vehicle application needs to be activated to be normally used. In addition, the vehicle is provided with a built-in network card, for example, a 4G network SIM (Subscriber Identity Module, subscriber identity module) card, to provide an Internet service for the vehicle. Each time the vehicle is powered on (connected to a power supply and started) or reconnects to a network after disconnection, the vehicle first detects a generation status of the virtual code. If the vehicle detects that no virtual code is generated, it means that the in-vehicle application is not activated. In this case, the vehicle actively sends to a host server an in-vehicle application activation request. The host server acquires the real vehicle identification number from a vehicle identification number interface of a vehicle system in response to the sending request of the vehicle.

In some embodiments, the virtual code may be alternatively acquired by: acquiring a vehicle identification number; acquiring a random code, and generating a second sequence code based on the random code and the vehicle identification number; performing an encryption operation on the second sequence code to obtain a third sequence code; and acquiring an activation verification code, and generating the virtual code based on the activation verification code and the third sequence code.

Specifically, the vehicle-mounted device first acquires the real vehicle identification number. After acquiring the vehicle identification number, the vehicle-mounted device generates a random code. Because the virtual code finally generated needs to be effective in identifying the vehicle, the random code may be data related to inherent information of the vehicle. Next, the vehicle-mounted device generates the second sequence code based on the random code and the vehicle identification number. For example, the random code and the vehicle identification number may be combined to obtain the second sequence code. Next, the encryption operation is performed on the second sequence code. For example, the second sequence code can be encrypted by using a one-way encryption algorithm to obtain the third sequence code. Finally, the vehicle-mounted device generates an activation verification code. Because the virtual code finally generated needs to be effective in identifying the vehicle, the activation verification code can also be data related to the inherent information of the vehicle. The vehicle-mounted device generates the virtual code based on the activation verification code and the third sequence code. In this way, the real vehicle identification number is encrypted through multi-layer encryption to obtain the virtual code. The obtained virtual code can not only be used to identify the vehicle, but also prevent exposure of the vehicle identification number, thereby ensuring security of personal privacy data of the user. In addition, the virtual code has high security and is not easy to be cracked.

It should be noted that, in this embodiment, reference may be made to the method for acquiring the vehicle identification number in the foregoing embodiment for a specific method for acquiring the vehicle identification number.

In an implementation, the random code may be acquired by: determining a vehicle model; and generating a random code based on the vehicle model. In other words, the random code may be generated based on the vehicle model. As an example, the random code may be generated based on the vehicle model by using a random code generator.

Specifically, when acquiring the real vehicle identification number via the vehicle identification number interface of the vehicle system, the vehicle-mounted device detects the vehicle model by via a vehicle model interface. After determining the vehicle model, the vehicle-mounted device generates a secret code, namely, the random code, corresponding to the vehicle model. Lengths of the vehicle identification number and the random code are not limited, and are determined based on actual conditions. For example, the vehicle identification number generally consists of 17 characters, and the random code may be set to four characters. After the vehicle identification number and the random code are obtained, a 4-character random code may be added to the 17-character vehicle identification number, to obtain a second sequence code with a length of 21 characters.

It should be noted that a method for generating the second sequence code based on the vehicle identification number and the random code is not limited. For example, the random code may be directly added at the beginning or end of the vehicle identification number, or the random code may be broken apart and inserted into the vehicle identification number. This is not limited herein.

In an implementation, in the foregoing two embodiments of encrypting the vehicle identification number, a specific encryption method used may be: to perform the encryption operation by using an MD5 (Message Digest Algorithm, message digest algorithm) encryption algorithm. It should be noted that MD5 is a one-way hash (HASH, hash) encryption algorithm, which is irreversible. Therefore, except for brute-force cracking, generally, no result can be obtained by using a reversal algorithm. A one-way hash function is also referred to as a message digest function, a hash function, or a hashing function. An input message is also referred to as a pre-image, and an output hash value is also referred to as a message digest or a fingerprint, which is equivalent to an ID of the message. For example, the second sequence code may be used as pre-image input, and the output message digest is referred to as a fourth sequence code. Another DM5 value with a fixed length may be generated by performing an operation on data with any length using the DM5 encryption algorithm. For example, an encryption operation may be performed on a 21-character second sequence code to obtain a 16-character third sequence code.

In an implementation, an activation verification code may be acquired by: determining a vehicle manufacturer identifier, where the vehicle manufacturer identifier indicates the vehicle manufacturer information; and determining the activation verification code based on the vehicle manufacturer identifier.

Specifically, after obtaining the first sequence code or the third sequence code, the vehicle-mounted device further adds an identifier to the virtual code. The identifier may be characters that enables identification of a name of a company to which the vehicle belongs. Specifically, an activation verification code may be generated based on the vehicle manufacturer information, such as a company logo information of the vehicle, and the activation verification code may be added to the first sequence code to obtain the virtual code. A length of the activation verification code is not limited, and is determined based on actual conditions. For example, the activation verification code may be set to three characters. After obtaining the 3-character activation verification code and the 16-character third sequence code, the 3-character activation verification code may be added to the 16-character third sequence code to obtain a virtual code with a length of 19 characters.

It should be noted that the vehicle manufacturer information (such as the company logo information of the vehicle) may be characters that can identify the name of the manufacturer. A length and character type of the vehicle manufacturer information/identifier may be set according to actual needs. The characters may be letters, numbers, special symbols, and the like, and are not specifically limited herein. In addition, the vehicle manufacturer information may be identification information agreed upon in advance by an in-vehicle application supplier and the vehicle manufacturer.

In addition, the method for generating the virtual code based on the activation verification code and the first sequence code and based on the activation code and the third sequence code is not limited. For example, the activation verification code may be directly added at the beginning or end of the second sequence code and the fourth sequence code. The generated virtual code is in one-to-one correspondence with the vehicle identification number, and one unique virtual code is generated for one vehicle identification number.

Based on the foregoing descriptions, it can be learned that the vehicle identification number has undergone three encryption operations and cannot be restored to a true value of the vehicle identification number, thereby effectively ensuring high confidentiality of the vehicle identification number. Considering that MD5 is a public encryption algorithm, a person familiar with commonly used encryption algorithms can easily obtain the pre-image through deciphering and decoding. Therefore, the vehicle identification number is mapped both before and after encryption, which is equivalent to adding two layers of encryption logic to personal information, so as to prevent a third party from acquiring real personal privacy data, targeting a user, threatening the user, and infringing privacy rights of the user. The method can reduce manual input due to the use of an existing encryption algorithm, so that work efficiency is improved. In addition, the addition of identifiers makes the operation method simple and ensures a high confidentiality of the vehicle identification number. Moreover, because the encryption operation on the vehicle identification number in embodiments of the present disclosure is completely performed on the vehicle-mounted device, usage of an operating memory of the vehicle can be reduced.

Therefore, use of the foregoing encryption method for the vehicle identification number makes a secret code indicating the vehicle model (that is, a vehicle model identifier) and a method of adding the vehicle model identifier (that is, a method of generating the second sequence code) be impossible to be acquired, even if the vehicle identification number, the vehicle model, and an encryption algorithm type of the user are acquired Therefore, the possibility to obtain an encrypted virtual code. through deduction is eliminated. Alternatively, even if the encryption algorithm of the virtual code and the vehicle identification number is acquired, it is impossible to acquire the vehicle model and the secret code of the vehicle. Therefore, the possibility to obtain a real vehicle identification number of the user through deduction is eliminated. In this way, unidirectionality and irreversibility of data transmission can be greatly ensured, thereby ensuring security of personal privacy data of the user.

It should be noted that the various methods for acquiring the vehicle identification number shown in the foregoing examples are merely exemplary and are not intended to be specific limitations on the present disclosure. In specific application, the method can be selected based on actual conditions or determined based on historical experience.

S102: The virtual code is sent to an in-vehicle application, to enable the in-vehicle application to perform an activation operation based on the virtual code.

Specifically, after acquiring the virtual code, the vehicle-mounted device may send the virtual code to the in-vehicle application, so that when the in-vehicle application is started for the first time, an activation operation may be performed based on the virtual code.

In an implementation, that the virtual code is sent to the in-vehicle application includes: The virtual code is sent to the in-vehicle application when the in-vehicle application is started for the first time.

Specifically, after generating the virtual code, the vehicle-mounted device transmits the generated virtual code to the vehicle and stores the code in a local memory of the vehicle. The virtual code needs to be placed in a non-deletable directory, and the virtual code cannot be cleared when factory settings are restored or data is cleared. In other words, a vehicle has only one fixed virtual code, and even after re-requesting and re-acquiring, the virtual code is the same as the virtual code generated for the first time.

When the in-vehicle application is started for the first time, the vehicle sends the virtual code to the in-vehicle application, to enable the in-vehicle application to perform the activation operation based on the virtual code. For example, when the in-vehicle application is started for the first time in an online state, a display screen of the vehicle promptly displays a prompt about the in-vehicle application activation operation. After a user clicks/taps to agree, the in-vehicle application interacts with the vehicle system via a virtual code interface to retrieve the virtual code of the vehicle.

If the virtual code is retrieved successfully, an in-vehicle application activation program is started. At this time, the in-vehicle application generates an in-vehicle application activation request based on a unique and non-repetitive virtual code and sends the request to a cloud server of the in-vehicle application supplier. After receiving the in-vehicle application activation request, the cloud server of the in-vehicle application supplier verifies the validity of the virtual code, for example, verifies whether the virtual code includes a company logo of the vehicle, and determines whether a region where the virtual code is uploaded matches a region of the cloud server of the in-vehicle application supplier. If the virtual code is verified to be valid, an activation success indication is returned to the in-vehicle application.

After the in-vehicle application is successfully activated, full functions of the in-vehicle application can be normally used, and the display screen of the vehicle does not display the prompt about the in-vehicle application activation operation. If the in-vehicle application activation fails, the in-vehicle application cannot be used normally, and a prompt: "Application not activated, please contact the dealer" is provided on the display screen of the vehicle, and the virtual code is automatically re-acquired from the vehicle system via the virtual code interface. After the in-vehicle application is successfully activated, the vehicle system no longer responds to a virtual code retrieval request of the in-vehicle application.

It should be noted that there are many reasons why the in-vehicle application is not activated. The first reason may be that a network connection status is poor during activation, and after the in-vehicle application acquires the virtual code, the virtual code is failed to be sent to the cloud server, or verification time is excessively long and exceeds a response time range. The second reason may be that an error occurs in the cloud server of the in-vehicle application supplier, the cloud server fails to return an activation success indication, or the like.

In addition, because the virtual code is in a refresh state each time the vehicle is powered on or reconnects to a network after disconnection, it is necessary to detect a generation status of the virtual code each time the vehicle is powered on or reconnects to a network after disconnection. If the virtual code is not detected, the foregoing operations of acquiring the vehicle identification number, encrypting the vehicle identification number, and generating and storing the virtual code are repeated. Virtual codes generated based on the confidential encryption algorithm are independent of each other and non-repetitive, so as to ensure that personal information of a user is not obtained by a third-party application supplier, and reduce a leakage risk of user privacy data.

To enable a person skilled in the art to more clearly understand the present disclosure, the following is described in detail with reference to a specific example. As shown in FIG. 2, the in-vehicle application activation method may include:
S201: Each time a vehicle is powered on or reconnects to a network after disconnection and when a virtual code is not detected, the vehicle outputs a sending request to a vehicle-mounted device, and sends a vehicle identification number to the vehicle-mounted device.
S202: The vehicle-mounted device receives, in response to the sending request of the vehicle, the vehicle identification number sent by the vehicle, and encrypts the vehicle identification number to obtain the virtual code.
S203: The vehicle-mounted device sends an encrypted virtual code to the vehicle.
S204: The vehicle stores the virtual code.
S205: The vehicle sends the virtual code to an in-vehicle application when the in-vehicle application is started for the first time.
S206: The in-vehicle application sends the virtual code to a cloud server of an in-vehicle application supplier after acquiring the virtual code.
S207: The cloud server of the in-vehicle application supplier verifies validity of the virtual code.
S208: The cloud server of the in-vehicle application supplier returns an activation success indication to the in-vehicle application if the virtual code is verified to be valid.
S209: The cloud server of the in-vehicle application supplier checks whether the in-vehicle application is successfully activated. If the in-vehicle application is successfully activated, S210 is performed; or if the in-vehicle application is not successfully activated, S211 is performed.
S210: The in-vehicle application is normally used.
S211: A prompt "Application not activated, please contact the dealer" is provided on a display screen of the vehicle.

In the foregoing embodiment, the vehicle-mounted device performs multiple encryption operations after acquiring the vehicle identification number from the vehicle, to generate a new virtual code that prevents identification of a real vehicle identification number of a user. The in-vehicle application acquires the encrypted virtual code via a vehicle system interface and sends the encrypted virtual code to the cloud server of the in-vehicle application supplier for verification. When a format of the virtual code is verified to be correct, an activation request is determined to be valid. The cloud server of the in-vehicle application supplier returns the activation success indication to the in-vehicle application, and then the application can be used normally. In this way, sensitive information such as the vehicle identification number is protected, anonymity of data to a third-party supplier is ensured, and overseas data protection regulations are complied with, so that security of personal privacy data of a user is greatly ensured, and user experience can be improved, with a simple and efficient method.

In conclusion, according to the in-vehicle application activation method in this embodiment of the present disclosure, the vehicle identification number is acquired, the vehicle identification number is encrypted to obtain the virtual code, and the virtual code is sent to the in-vehicle application, to enable the in-vehicle application to perform an activation operation based on the virtual code. In this way, a leakage risk of privacy data can be significantly reduced, security of personal privacy data of a user can be greatly ensured, and user experience can be improved, with a simple and efficient method.

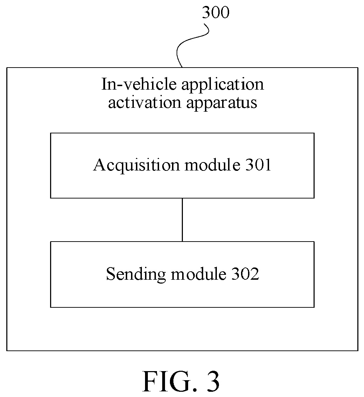

FIG. 3 is a schematic diagram of a structure of an in-vehicle application activation apparatus according to an embodiment of the present disclosure.

As shown in FIG. 3, the in-vehicle application activation apparatus 300 may include: an acquisition module 301 and a sending module 303.

The acquisition module 301 is configured to acquire a virtual code. The virtual code is configured to identify vehicle manufacturer information. The sending module 303 is configured to send the virtual code to an in-vehicle application, to enable the in-vehicle application to perform an activation operation based on the virtual code.

In some embodiments, the acquisition module 301 is specifically configured to: acquire a vehicle identification number; perform an encryption operation on the vehicle identification number to obtain a first sequence code; and acquire an activation verification code, and generate the virtual code based on the activation verification code and the first sequence code.

**In** some embodiments, the acquisition module 301 is further configured to: acquire a vehicle identification number; acquire a random code, and generate a second sequence code based on the random code and the vehicle identification number; perform an encryption operation on the second sequence code to obtain a third sequence code; and acquire an activation verification code, and generate the virtual code based on the activation verification code and the third sequence code.

**In** some embodiments, the acquisition module 301 is specifically configured to: determine a vehicle model; and generate a random code based on the vehicle model.

In some embodiments, the acquisition module 301 is further configured to: determine a vehicle manufacturer identifier, where the vehicle manufacturer identifier indicates the vehicle manufacturer information; and determine the activation verification code based on the vehicle manufacturer identifier.

In some embodiments, the acquisition module 301 further performs the encryption operation by using an MD5 encryption algorithm.

In some embodiments, the acquisition module 301 is specifically configured to: receive, in response to a sending request from the vehicle, the vehicle identification number sent by a vehicle, where the sending request is generated by the vehicle each time the vehicle is powered on or reconnects to a network after disconnection and when the virtual code is not detected.

In some embodiments, the sending module 302 is specifically configured to: send the virtual code to the in-vehicle application when the in-vehicle application is started for the first time.

It should be noted that, for details not disclosed in the in-vehicle application activation apparatus, refer to the details disclosed in the in-vehicle application activation method. Details are not described herein again.

According to the in-vehicle application activation apparatus in this embodiment of the present disclosure, the acquisition module acquires the vehicle identification number, an encryption module encrypts the vehicle identification number. The virtual code is acquired, and the sending module sends the virtual code to the in-vehicle application, to enable the in-vehicle application to perform an activation operation based on the virtual code. In this way, a leakage risk of privacy data can be significantly reduced, security of personal privacy data of a user can be greatly ensured, and user experience can be improved, with a simple and efficient method.

Corresponding to the foregoing embodiments, an embodiment of the present disclosure further provides a vehicle-mounted device, including a memory, a processor, and an in-vehicle application activation program stored in the memory and executable on the processor. When the processor executes the in-vehicle application activation program, the foregoing in-vehicle application activation method can be implemented.

According to the vehicle-mounted device in this embodiment of the present disclosure, the foregoing in-vehicle application activation method is used. In this way, a leakage risk of privacy data can be significantly reduced, security of personal privacy data of a user can be greatly ensured, and user experience can be improved, with a simple and efficient method.

Corresponding to the foregoing embodiments, an embodiment of the present disclosure further provides a vehicle, including the foregoing in-vehicle application activation apparatus, or the foregoing vehicle-mounted device.

According to the vehicle-mounted device in this embodiment of the present disclosure, including the foregoing in-vehicle application activation apparatus or the foregoing vehicle-mounted device, security of personal privacy data of a user can be greatly ensured, and user experience is improved, with a simple and efficient method.

Corresponding to the foregoing embodiments, an embodiment of the present disclosure further provides a computer-readable storage medium, having an in-vehicle application activation program stored thereon. When the in-vehicle application activation program is executed by a processor, the foregoing in-vehicle application activation method is implemented.

According to the computer-readable storage medium in this embodiment of the present disclosure, the foregoing in-vehicle application activation method is used. **In** this way, a leakage risk of privacy data can be significantly reduced, security of personal privacy data of a user can be greatly protected, and user experience can be improved, with a simple and efficient method.

It should be noted that, the logic and/or steps shown in the flowcharts or described in another manner herein, for example, a sequenced list that may be considered as executable instructions configured to implement logical functions, may be specifically implemented in any computer-readable medium to be used by an instruction execution system, apparatus, or device (for example, a computer-based system, a system including a processor, or another system that can obtain an instruction from the instruction execution system, apparatus, or device and execute the instruction) or to be used by combining such instruction execution systems, apparatuses, or devices. In the specification of the present disclosure, the "computer-readable medium" may be any apparatus that can include, store, communicate, propagate, or transmit programs to be used by the instruction execution system, apparatus or device, or to be used in combination with the instruction execution system, apparatus or device. More specific examples (a non-exhaustive list) of the computer-readable medium include the following: an electrical connection part (electronic device) having one or more wires, a portable computer diskette (magnetic apparatus), a random access memory (RAM), a read-only memory (ROM), an erasable programmable read-only memory (EPROM or a flash memory), an optical fiber apparatus, and a portable compact disk read-only memory (CDROM). In addition, the computer-readable medium may be even paper or another suitable medium on which the program can be printed, because the program may be obtained electronically by, for example, optically scanning paper or another medium, then editing, interpreting, or processing in other suitable ways if necessary, and then storing the program in a computer memory.

It should be understood that, parts of the present disclosure can be implemented by using hardware, software, firmware, or a combination thereof. In the foregoing implementations, multiple steps or methods may be implemented by using software or firmware that are stored in a memory and are executed by a proper instruction execution system. For example, if hardware is used for implementation, same as in another implementation, implementation may be performed by any one of the following technologies or a combination thereof well known in the art: a discrete logic circuit including a logic gate circuit configured to implement a logic function of a data signal, a dedicated integrated circuit including a proper combined logic gate circuit, a programmable gate array (PGA), a field programmable gate array (FPGA), and the like.

In the description of this specification, the description of the reference terms "an embodiment", "some embodiments", "an example", "a specific example", "some examples," and the like means that specific features, structures, materials or characteristics described in combination with the embodiment(s) or example(s) are included in at least one embodiment or example of the present disclosure. In this specification, exemplary descriptions of the foregoing terms do not necessarily refer to the same embodiment or example. In addition, the described specific features, structures, materials, or characteristics may be combined in a proper manner in any one or more of the embodiments or examples. In addition, terms "first" and "second" used in embodiments of the present disclosure are only intended to describe the objective and cannot be understood as indicating or implying relative importance or implying a quantity of indicated technical features in this embodiment. Therefore, a feature restricted by "first" or "second" in embodiments of the present disclosure may explicitly or implicitly indicate that this embodiment includes at least one of such features. In the descriptions of the present disclosure, unless explicitly specified in embodiments, the term "multiple" means at least two or more, for example, two, three, for four. Although embodiments of the present disclosure are shown and described above, it may be understood that, the foregoing embodiments are exemplary and should not be understood as limitation to the present disclosure. A person of ordinary skill in the art can make changes, modifications, replacements, or variations to the foregoing embodiments within the scope of the present disclosure.

## Claims

1. An in-vehicle application activation method, comprising:
acquiring a virtual code, the virtual code being configured to identify vehicle manufacturer information; and
sending the virtual code to an in-vehicle application, to enable the in-vehicle application to perform an activation operation based on the virtual code.

2. The in-vehicle application activation method according to claim 1, wherein the virtual code comprises an encrypted code and an activation verification code, the encrypted code is obtained by encrypting information other than the vehicle manufacturer information, and the activation verification code is configured to identify a name of a vehicle manufacturer.

3. The in-vehicle application activation method according to claim 1, wherein the acquiring a virtual code comprises:
acquiring a vehicle identification number;
performing an encryption operation on the vehicle identification number to obtain a first sequence code; and
acquiring an activation verification code, and generating the virtual code based on the activation verification code and the first sequence code.

4. The in-vehicle application activation method according to claim 1, wherein the acquiring a virtual code comprises:
acquiring a vehicle identification number;
acquiring a random code, and generating a second sequence code based on the random code and the vehicle identification number;
performing an encryption operation on the second sequence code to obtain a third sequence code; and
acquiring an activation verification code, and generating the virtual code based on the activation verification code and the third sequence code.

5. The in-vehicle application activation method according to claim 4, wherein the acquiring a random code comprises:
determining a vehicle model; and
generating the random code based on the vehicle model.

6. The in-vehicle application activation method according to any one of claims 2 to 4, wherein the acquiring an activation verification code comprises:
determining a vehicle manufacturer identifier, the vehicle manufacturer identifier indicating the vehicle manufacturer information; and
determining the activation verification code based on the vehicle manufacturer identifier.

7. The in-vehicle application activation method according to any one of claims 2 to 5, wherein the encryption operation is performed by using an MD5 encryption algorithm.

8. The in-vehicle application activation method according to any one of claims 3 to 5, wherein the acquiring a vehicle identification number comprises:
receiving, in response to a sending request from a vehicle, the vehicle identification number sent by the vehicle, the sending request being generated by the vehicle each time the vehicle is powered on or reconnects to a network after disconnection and when the virtual code is not detected.

9. The in-vehicle application activation method according to any one of claims 1 to 5, wherein the sending the virtual code to the in-vehicle application comprises:
sending the virtual code to the in-vehicle application when the in-vehicle application is started for the first time.

10. A vehicle-mounted device, comprising a memory, a processor, and an in-vehicle application activation program stored in the memory and executable on the processor, and the in-vehicle application activation program, when being executed by the processor, implementing the in-vehicle application activation method according to any one of claims 1 to 9.

11. A vehicle, comprising the vehicle-mounted device according to claim 10.
